# EUROPEAN PATENT SPECIFICATION

(11) **EP 4 049 900 B1**
(45) Date of publication and mention of the grant of the patent: **25.06.2025**
(21) Application number: 22155478.5
(22) Date of filing: 07.02.2022
(51) Int. Cl.: B60R 16/02, B60H 1/00, B60K 1/04, B60K 7/00, B62D 21/00, B62D 25/20

(54) **PROTECTION STRUCTURE OF WIRE HARNESSES**
SCHUTZSTRUKTUR FÜR KABELBÄUME
STRUCTURE DE PROTECTION DE FAISCEAUX DE CÂBLES

(30) Priority: 26.02.2021 JP 2021030106
(43) Date of publication of application: 31.08.2022
(73) Proprietor: Suzuki Motor Corporation, Hamamatsu-shi, Shizuoka 432-8611 (JP)
(72) Inventor: KITAHARA, Yugo, Hamamatsu-shi, 432-8611 (JP); TSUGE, Atsushi, Hamamatsu-shi, 432-8611 (JP); ANDO, Shoichiro, Hamamatsu-shi, 432-8611 (JP)
(74) Representative: Henkel & Partner mbB

(56) References cited:
- EP-A1- 2 685 524
- WO-A2-2012/028927
- US-A1- 2018 086 192

## Description

### [Technical Field]

The present invention generally relates to a vehicle with a protection structure of wire harnesses.

### [Background Art]

A protection structure of battery harnesses is known, which is used with battery harnesses connected to a plurality of terminals of a high-voltage battery, i.e., an electrical device which is difficult to be mounted in a lower portion of an engine compartment or a floor panel of a vehicle and thus arranged between the floor panel and a seat in the vehicle.

The high-voltage battery and the battery harnesses are disposed in a case. The floor panel has formed therein an opening aligned with the high-voltage battery in a longitudinal direction of the vehicle. The battery harnesses extend from below to above the floor panel through the opening and connect with the terminals of the high-voltage battery.

JP 2002-95 142 A discloses a battery harness protection structure for a vehicle.

US 2018/086192 discloses a protection structure of wire harnesses, comprising:an electrical device with a plurality of terminals which are disposed on a side surface thereof and to which the wire harnesses are connected, the electrical device being mounted on a floor panel of a vehicle; an opening which is formed in the floor panel cross member and in a planar view of the vehicle, arranged with the terminals in a terminal array direction in which the terminals are arrayed; and a cover which is disposed on the floor panel to cover the electrical device.

### [Summary of Invention]

### [Technical Problem]

The above protection structure may be designed to have the opening of the floor panel and the high-voltage battery which are aligned with each other in a width-wise direction of the vehicle, but not in the longitudinal direction due to restrictions of layout thereof between the floor panel and the seat.

The above layout requires lengthening the battery harnesses to be longer than that in the case where the opening of the floor panel and the terminals of the high-voltage battery are aligned in the longitudinal direction of the vehicle and also bending and arranging the battery harnesses in order to avoid physical interference between the terminals.

If the lengthened battery harnesses are greatly bent in order to be placed in a limited inner space of a cover, it may cause stress to concentrate on the bend(s) or ends of the battery harnesses, thereby exerting an excessive load on the battery harnesses.

The present invention has been made in view of the above problem. It is an object of the invention to provide a vehicle with a protection structure of wire harnesses capable of permitting a long wire harness to be gently bent and arranged in a cover, thereby preventing an excessive load on the wire harness, in a case where an opening of a floor panel and a plurality of terminals are, in a planar view of a vehicle, aligned with each other in a direction in which the terminals are arrayed.

### [Solution to Problem]

According to the present invention, there is provided a vehicle with the features of claim 1 comprising a protection structure of wire harnesses, including: an electrical device with a plurality of terminals which are disposed on a side surface thereof and to which wire harnesses are connected, the electrical device being mounted on a floor panel of a vehicle; an opening which is formed in the floor panel and, in a planar view of the vehicle, arranged with the terminals in a terminal array direction in which the terminals are arrayed; and a cover which is disposed on the floor panel to cover the electrical device, wherein the wire harnesses extend from below to above the floor panel through the opening and also extend in the terminal array direction above the floor panel, so as to connect with the terminals, the cover has a side wall which faces the side surface of the electrical device and is equipped with a bulging portion, the bulging portion bulging from a wall surface of the side wall so as to be away from the side surface of the electrical device, and at least one of the wire harnesses is laid out in a space defined by the bulging portion within the cover.

### [Advantageous Effect of Invention]

According to the present invention, it is possible to permit a long wire harness to be gently bent and arranged in a cover, thereby preventing an excessive load on the wire harness, in a case where an opening of a floor panel and a plurality of terminals are, in a planar view of a vehicle, aligned with each other in a direction in which the terminals are arrayed.

### [Brief Description of Drawings]

Fig. 1 is a plan view which illustrates a floor panel of a vehicle equipped with a protection structure of wire harnesses according to an embodiment of the invention.
Fig. 2 is a back view of a cross member of a vehicle equipped with a protection structure of wire harnesses according to an embodiment of the invention.
Fig. 3 is a plan view which illustrates a battery and a floor panel around the battery of a vehicle equipped with a protection structure of wire harnesses according to an embodiment of the invention.
Fig. 4 is a left view of a battery pack of a vehicle equipped with a protection structure of wire harnesses according to an embodiment of the invention.
Fig. 5 is a plan view which illustrates a battery and a floor panel around the battery of a vehicle equipped with a protection structure of wire harnesses according to an embodiment of the invention.
Fig. 6 is a left view of a battery pack of a vehicle equipped with a protection structure of wire harnesses according to an embodiment of the invention.
Fig. 7 is a bottom view of a battery pack of a vehicle equipped with a protection structure of wire harnesses according to an embodiment of the invention.
Fig. 8 is a front view of a battery pack of a vehicle equipped with a protection structure of wire harnesses according to an embodiment of the invention.
Fig. 9 is a cross sectional view taken along the line *IX-IX* in Fig. 3.
Fig. 10 is a front view of a battery pack of a vehicle equipped with a protection structure of wire harnesses according to an embodiment of the invention.

### [Description of Embodiment]

A protection structure of wire harnesses according to an embodiment of the invention includes: an electrical device with a plurality of terminals which are disposed on a side surface thereof and to which wire harnesses are connected, the electrical device being mounted on a floor panel of a vehicle; an opening which is formed in the floor panel and, in a planar view of the vehicle, arranged with the terminals in a terminal array direction in which the terminals are arrayed; and a cover which is disposed on the floor panel to cover the electrical device, wherein the wire harnesses extend from below to above the floor panel through the opening and also extend in the terminal array direction above the floor panel, so as to connect with the terminals, the cover has a side wall which faces the side surface of the electrical device and is equipped with a bulging portion, the bulging portion bulging from a wall surface of the side wall so as to be away from the side surface of the electrical device, and at least one of the wire harnesses is laid out in a space defined by the bulging portion within the cover.

Thus, it is possible to permit a long wire harness to be gently bent and arranged in a cover, thereby preventing an excessive load on the wire harness, in a case where an opening of a floor panel and a plurality of terminals are, in a planar view of a vehicle, aligned with each other in a direction in which the terminals are arrayed.

### [Embodiment]

A protection structure of wire harnesses according to an embodiment of the invention will be described below with reference to the drawings.

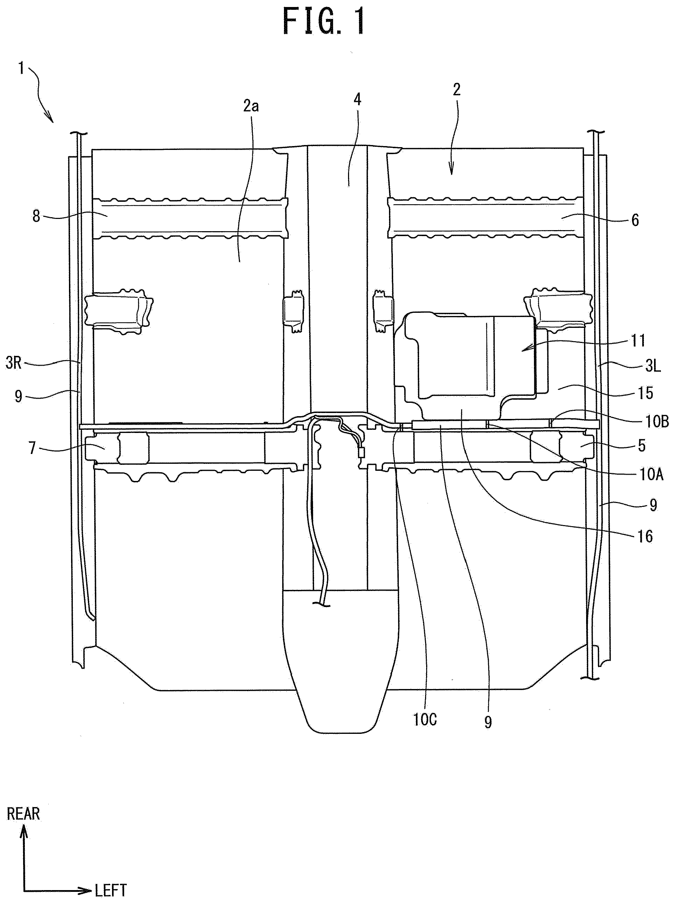

Figs. 1 to 10 are views which illustrate a protection structure of wire harnesses according to an embodiment of the invention. In Figs. 1 to 10, upper-lower, front-rear, and left-right directions correspond to vertical (i.e., a height-wise direction of a vehicle), longitudinal (i.e., front-rear direction of the vehicle), and lateral directions (i.e., a width-wise direction of the vehicle) of the vehicle mounted with a battery pack.

The structure will first be described.

The vehicle 1 is, as illustrated in Fig. 1, equipped with the floor panel 2. The left-side sill 3L is disposed on the left side of the floor panel 2. The left-side sill 3L extends along the floor panel 2 in the longitudinal direction. The right-side sill 3R is disposed on the right side of the floor panel 2. The right-side sill 3R extends along the floor panel 2 in the longitudinal direction.

The floor panel 2 has the floor tunnel 4 located on the center of width thereof. The floor tunnel 4 bulges upward from the floor panel 2.

The front cross member 5 and the rear cross member 6 are arranged between the floor tunnel 4 and the left-side sill 3L. The front cross member 5 and the rear cross member 6 are located away from each other in the longitudinal direction and extend in the width-wise direction of the vehicle 1.

The front cross member 7 and the rear cross member 8 are arranged between the floor tunnel 4 and the right-side sill 3R. The front cross member 7 and the rear cross member 8 are located away from each other in the longitudinal direction and extend in the width-wise direction of the vehicle 1.

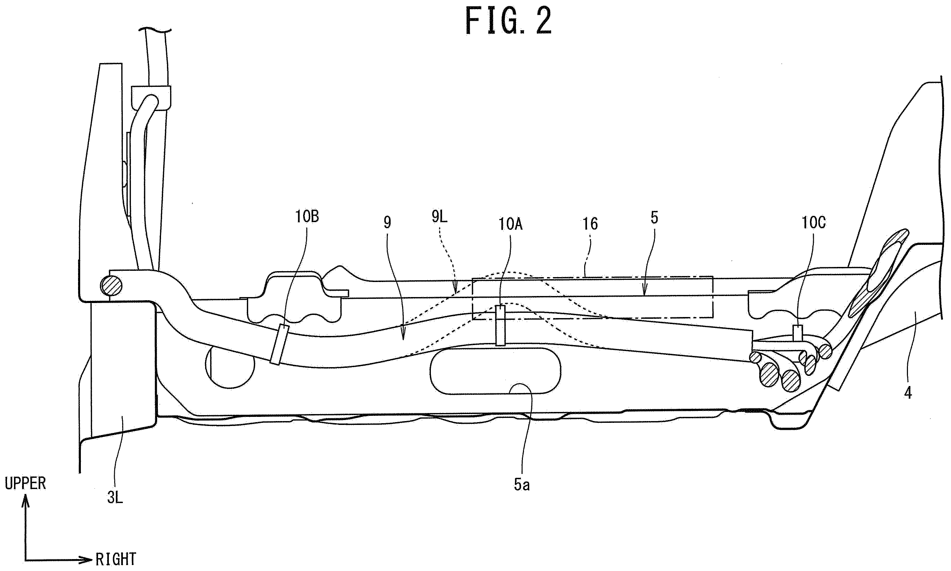

The wire harness 9, as clearly illustrated in Fig. 2, has portions secured to the front cross member 5. The wire harness 9 extends in the width-wise direction of the vehicle 1. Specifically, the wire harness 9, as illustrated in Fig. 1, extends along the right-side sill 3R in the longitudinal direction and has a branch diverging from the middle of length thereof extending along the right-side sill 3R. The branch extends along the front cross member 7 toward the floor tunnel 4.

After extending from the floor tunnel 4 to the front cross member 5 in the width-wise direction of the vehicle 1, the wire harness 9 then extends along the left-side sill 3L in the longitudinal direction. The front cross member 5 in this embodiment constitutes a cross member. The wire harness 9 in this embodiment constitutes a first wire harness.

The front cross member 5, as illustrated in Fig. 2, has the opening 5a formed in the middle of width thereof extending in the width-wise direction of the vehicle 1. The opening 5a is used to have a vehicle-mounted member passing through the front cross member 5 in the longitudinal direction. For instance, a duct of an air conditioner arranged in front of the front cross member 5 passes through the opening 5a and then extends rearwardly from the front cross member 5.

The front cross member 5 has the band-shaped member 10A disposed thereon. The band-shaped member 10A is located above the opening 5a and serves as a fastener to attach the middle of a portion of the wire harness 9 extending in the width-wise direction of the vehicle 1 to the front cross member 5.

The front cross member 5 is also equipped with the band-shaped members 10B and 10C. The band-shaped members 10B and 10C are located slightly below the band-shaped member 10A and on the right and left sides of the band-shaped member 10A on the front cross member 5 in the width-wise direction of the vehicle 1. The band-shaped members 10B and 10C fasten the right and left ends of the laterally extending portion of the wire harness 9 to the front cross member 5.

In other words, the band-shaped member 10B is arranged on the left side of the band-shaped member 10A in the width-wise direction of the vehicle 1. The band-shaped member 10C is arranged on the right side of the band-shaped member 10A in the width-wise direction of the vehicle 1.

In this disclosure, the center or middle of the wire harness 9 in the width-wise direction of the vehicle 1 represents a portion of the wire harness 9 located on the center of length of the front cross member 5 extending in the width-wise direction of the vehicle 1. The right and left ends of the wire harness 9 in the width-wise direction of the vehicle 1 represent portions of the wire harness 9 located on the right and left ends of length of the front cross member 5 extending in the width-wise direction of the vehicle 1.

The band-shaped member 10A in this embodiment serves as a first fastener. The band-shaped members 10B and 10C in this embodiment serve as second fasteners.

The floor panel 2, as illustrated in Figs. 1, 3, and 4, has the upper surface 2a on which the battery pack 11 is mounted as an electrical device. The battery pack 11 is disposed in space between a front passenger seat, not shown, and the floor panel 2. The battery pack 11 may alternatively be arranged in space between a driver's seat, not shown, and the floor panel 2.

The battery pack 11 is, as described above, disposed between the front passenger seat and the floor panel 2, in other words, in an occupant compartment of the vehicle 1 which is lower in temperature than the engine compartment, thereby ensuring the stability in performance of the battery 12, which will be described later.

The layout of the battery pack 11 in the occupant compartment avoids an undesirable decrease in volume of a trunk of the vehicle 1 by the volume of the battery pack 11 to improve the degree of freedom for installation of the battery pack 11 and also enables the engine compartment to be reduced in size because there is no need to mount the battery pack 11 in the engine compartment.

In a planar view of the vehicle 1 in Fig. 1, the battery pack 11 is arranged among the left-side sill 3L, the floor tunnel 4, the front cross member 5, and the rear cross member 6.

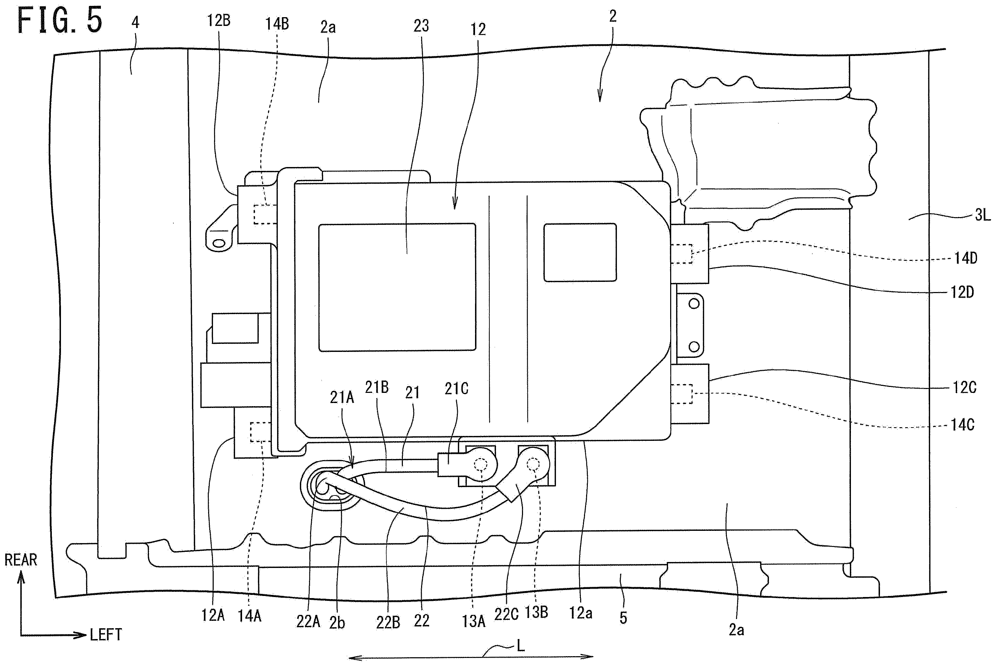

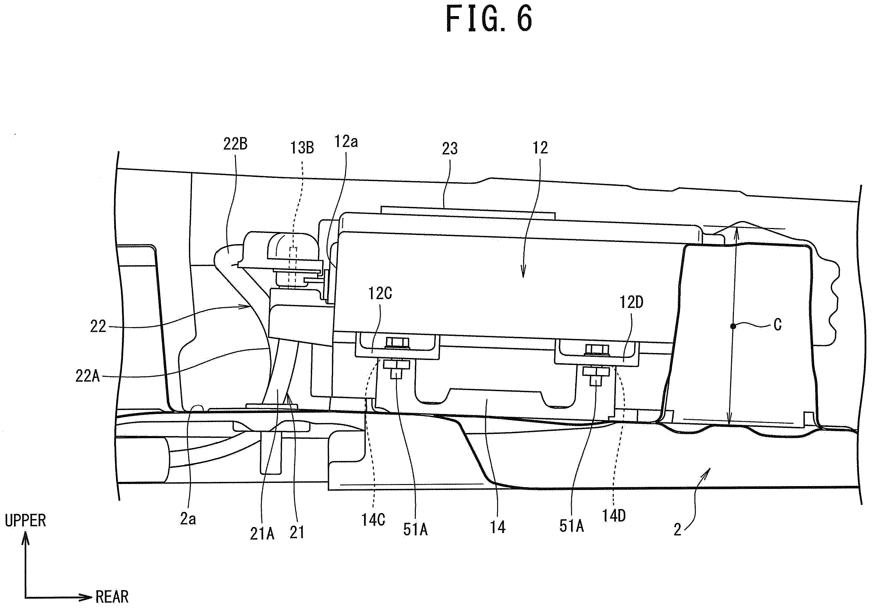

The battery pack 11, as clearly illustrated in Figs. 5 and 6, includes the battery 12 as an electrical device. The battery 12 includes a plurality of battery modules, not shown, a battery holder which has the battery modules disposed therein and protects them from damage, and the substrate 23 mounted on an upper surface of the battery holder.

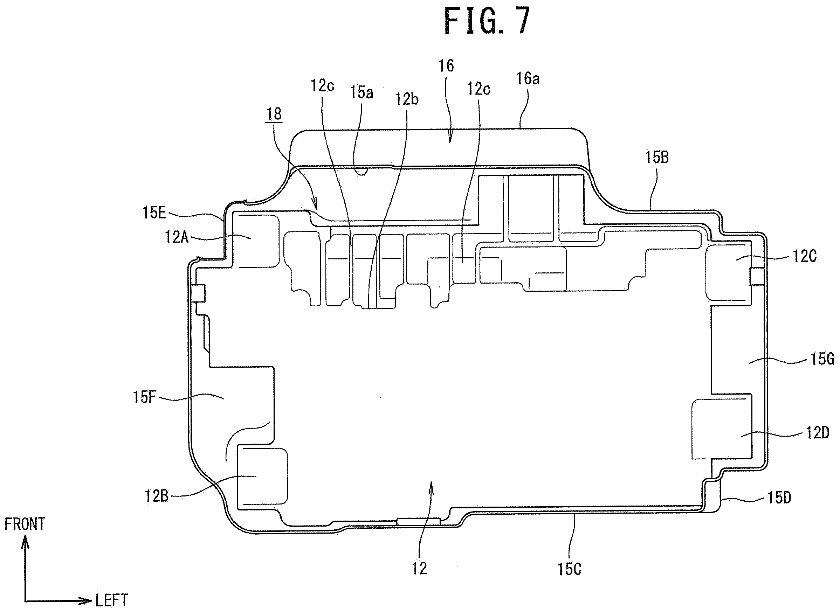

The battery 12 is, as illustrated in Figs. 5 and 7, equipped with a plurality of mounting tabs 12A, 12B, 12C, and 12D. The mounting tabs 12A, 12B, 12C, and 12D project from the side surface of the battery 12 outward (i.e., rightward and leftward) in the width-wise direction of the vehicle 1.

The floor panel 2, as illustrated in Fig. 6, has the bracket 14 attached thereto. The bracket 14 is equipped with the mounting tabs 14A and 14B (see Fig. 5).

The mounting tabs 14A and 14B protrude upward from the right end of the bracket 14 and are located in a higher position than the upper surface 2a of the floor panel 2.

The bracket 14 is equipped with the mounting tabs 14C and 14D (see Fig. 5). The mounting tabs 14C and 14D protrude upward from the left end of the bracket 14 and are located in a higher position than the upper surface 2a of the floor panel 2. The mounting tabs 14A and 14B are located at the same height as the mounting tabs 14C and 14D.

The mounting tabs 12A and 12B of the battery 12 are fastened to the mounting tabs 14A and 14B using bolts, not shown. The mounting tabs 12C and 12D of the battery 12 are fastened to the mounting tabs 14C and 14D using the bolts 51A. The mounting tabs 12A, 12B, 12C, and 12D in this embodiment constitute fastening portions.

The battery 12 is firmly secured to the floor panel 2 through the bracket 14 to be located away from the floor panel 2 in the upward direction. The mounting tabs 14A and 14B, 14C, 14D in this embodiment serve as fastened portions.

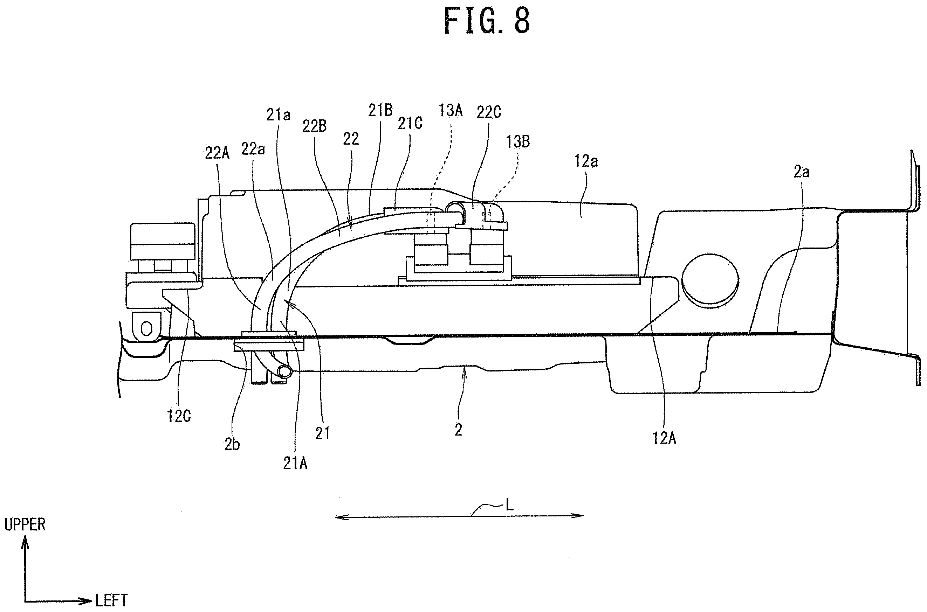

The terminals 13A and 13B are, as indicated by broken lines in Figs. 5 and 8, arranged above the front surface 12a of the battery 12. In a planar view of the vehicle 1, the terminals 13A and 13B are arranged adjacent each other in the width-wise direction of the vehicle 1. The width-wise direction of the vehicle 1 is, therefore, identical with an array direction L in which the terminals 13A and 13B are arrayed adjacent each other. In the following discussion, the array direction *L* of the terminals 13A and 13B will also be referred to as a terminal array direction *L*.

The terminals 13A and 13B are located in a higher position than the mounting tabs 14A, 14B, 14C, and 14D and the center C of height of the battery 12 (see Fig. 6). Fig. 5 omits the wire harness 9 for the sake of convenience.

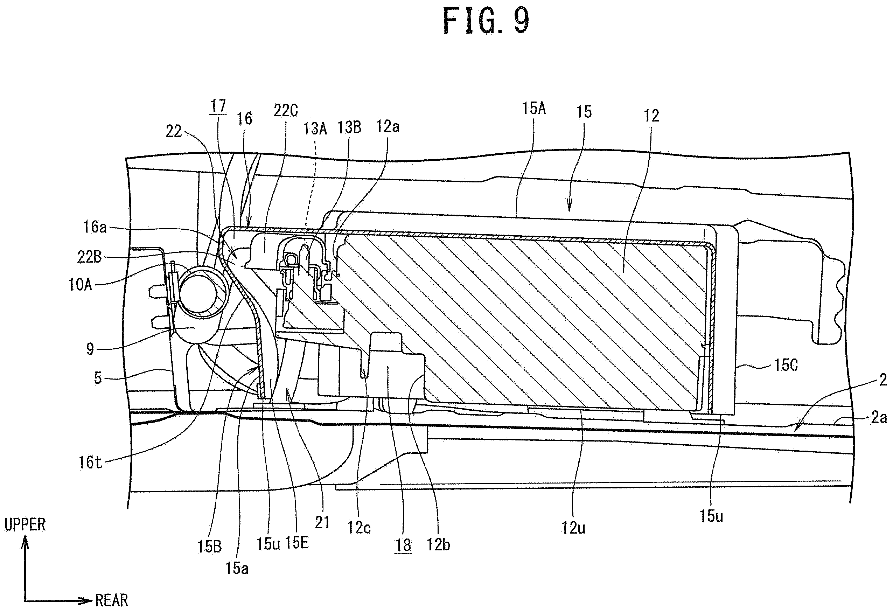

The terminals 13A and 13B are, as clearly illustrated in Fig. 9, arranged in front of the front surface 12a of the battery 12 and extend vertically. The terminals 13A and 13B are identical in configuration with each other and laid to overlap each other in the with-wise direction of the vehicle 1. The terminal 13A will be referred to as a first terminal. The terminal 13B will also be referred to as a second terminal.

The substrate 23 is, as illustrated in Fig. 6, located in a higher position than the terminals 13A and 13B. The substrate 23 serves as a control board to monitor a state of charge of the battery modules and control a charging or discharging operation of the battery modules.

The floor panel 2, as illustrated in Fig. 5, has the opening 2b formed therein. The opening 2b is located closer to the floor tunnel 4 than the terminals 13A and 13B are. In a planar view of the vehicle 1, the opening 2b is arranged adjacent the terminals 13A and 13B in the terminal array direction *L.*

The terminal 13B is located farther away from the opening 2b than the terminal 13A is in the terminal array direction *L*.

The wire harnesses 21 and 22 are, as clearly illustrated in Fig. 8, connected to the battery pack 11. The wire harnesses 21 and 22 extend from below the floor panel 2 to above the floor panel 2 through the opening 2b. The wire harnesses 21 and 22 also extend in the terminal array direction *L* above the floor panel 2 and have attached to first ends thereof the connectors 21C and 22C which connect with the terminal 13A and the terminal 13B, respectively.

The wire harnesses 21 and 22 are arranged to pass through the floor tunnel 4 below the floor panel 2 and connect at second ends thereof with an electrical device (not shown), such as an accessory installed in the vehicle 1. The wire harnesses 21 and 22, thus, deliver electrical power from the battery 12 to the electrical device. The wire harnesses 21 and 22 in this embodiment constitute a second wire harness.

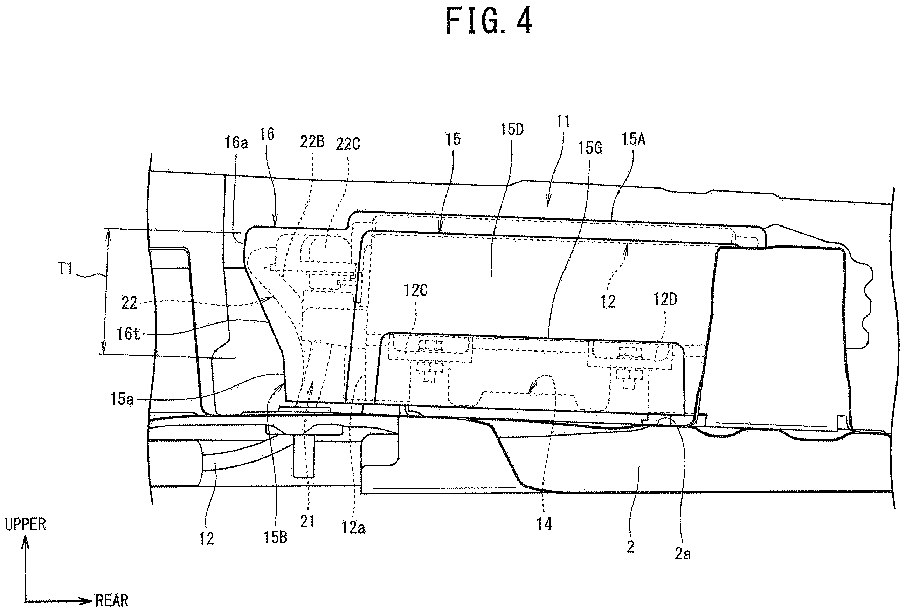

The battery pack 11 is, as illustrated in Figs. 4 and 9, equipped with the cover 15. The cover 15 includes the upper wall 15A, the front wall 15B, the rear wall 15C, the left-side wall 15D, and the right-side wall 15E which extend downward from the upper wall 15A.

The upper wall 15A is located above the opening 2b, the battery 12, and the wire harnesses 21 and 22 and covers the opening 2b, the upper surface of the battery 12, and the wire harnesses 21 and 22. The front wall 15B covers the front surface 12a of the battery 12 and the wire harnesses 21 and 22. The rear wall 15C, the left-side wall 15D, and the right-side wall 15E cover rear, left side, and right-side surfaces of the battery 12.

In other words, the opening 2b is located inside the front wall 15B, the rear wall 15C, the left-side wall 15D, and the right-side wall 15E and covered with the cover 15. The front wall 15B, the rear wall 15C, the left-side wall 15D, and the right-side wall 15E in this embodiment constitute a side wall.

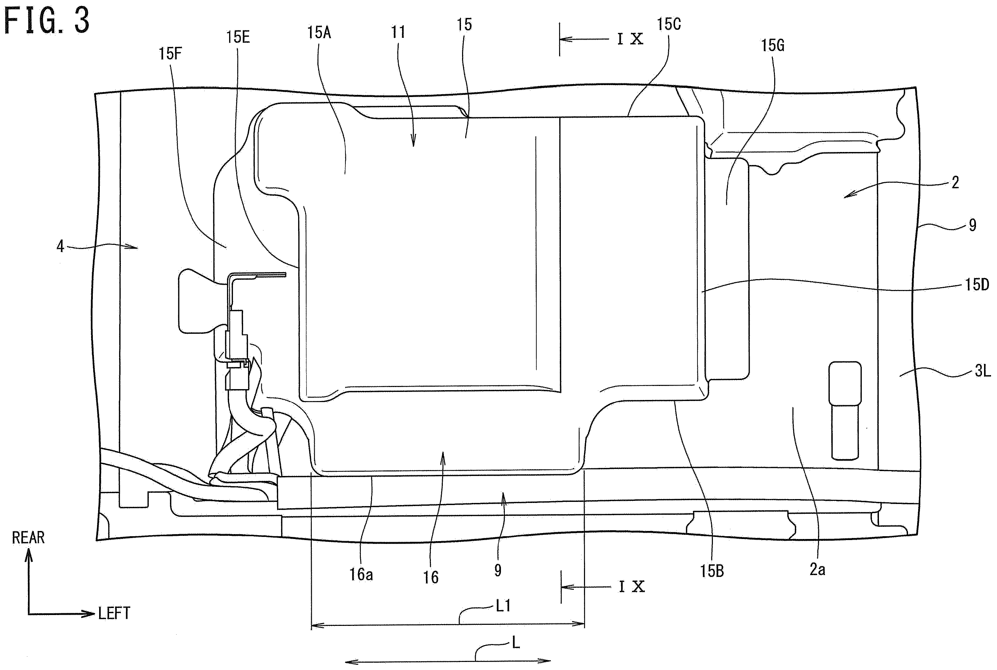

The front wall 15B of the cover 15 faces the wire harness 9 in the longitudinal direction. The wire harness 9 is, as illustrated in Fig. 3, arranged to extend along the front wall 15B in the width-wise direction of the vehicle 1.

The front wall 15B, the rear wall 15C, the left-side wall 15D, and the right-side wall 15E have the lower end 15u arranged close to the floor panel 2. The lower end 15u is, as can be seen in Fig. 9, located on the same level as the lower surface 12u of the battery 12 from the floor panel 2. The front wall 15B, the rear wall 15C, the left-side wall 15D, and the right-side wall 15E are identical in dimension (i.e., height) with each other in the vertical direction.

The front surface 12a of the battery 12 in this embodiment constitutes a side surface of an electrical device referred to in this disclosure. The front wall 15B of the cover 15 constitutes a side wall of a cover referred to in this disclosure.

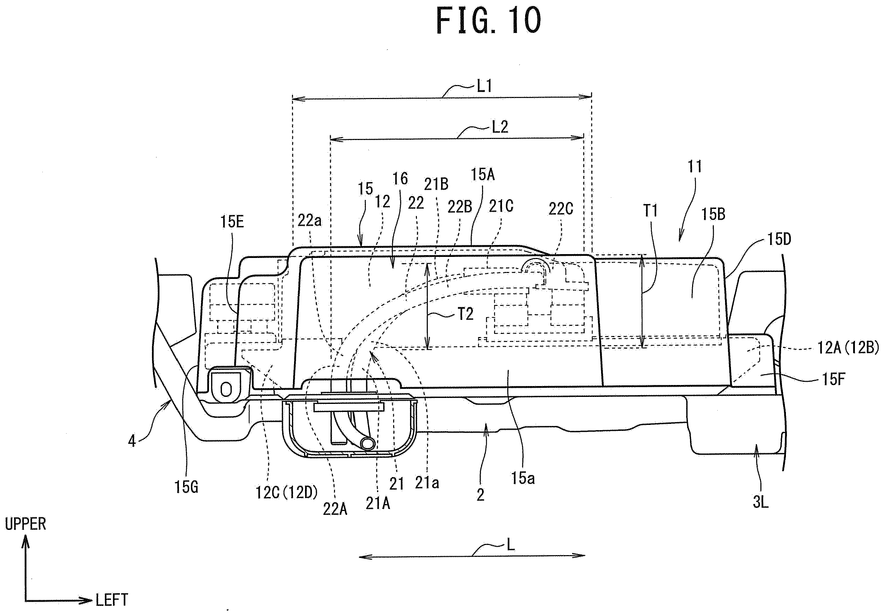

The cover 15 is, as can be seen in Figs. 3 and 7, equipped with the shrouds 15F and 15G. The shroud 15F protrudes outward from the right-side wall 15E of the cover 15 (i.e., in the rightward direction) to cover the mounting tabs 12A and 12B of the battery 12 from above and the left thereof (see Figs. 7 and 10).

The shroud 15G protrudes outward from the left-side wall 15E of the cover 15 (i.e., the rightward direction) to cover the mounting tabs 12C and 12D of the battery 12 from above and the left thereof (see Figs. 4 and 7).

The front wall 15B of the cover 15 which faces the front surface 12a of the battery 12 in the longitudinal direction is, as illustrated in Fig. 9, equipped with the bulging portion 16 (see Figs. 3, 4, and 7).

The bulging portion 16 is located at a higher position than the lower end 15u of the front wall 15B and bulges from the wall surface 15a of the front wall 15B in a direction away from the front surface 12a of the battery 12.

The bulging portion 16, as illustrated in Figs. 4 and 9, includes the slant portion 16t. The slant portion 16t extends in an upward direction obliquely away from the front surface 12a of the battery 12 from the wall surface 15a of the front wall 15B. The bulging portion 16 has the upper end 16a which is located above the slant portion 16t is located farthest from the front surface 12a of the battery 12 in the frontward direction.

The terminals 13A and 13B are located at the same height as the bulging portion 16 and face the bulging portion 16 in the longitudinal direction.

The terminals 13A and 13B in this embodiment are located at the same height as the upper end 16a of the bulging portion 16 which is located farthest away from the battery 12 in the frontward direction.

The bulging portion 16, as can be seen in Fig. 9, bulges from the wall surface 15a of the front wall 15B of the cover 15 toward the wire harness 9 to cover the wire harness 9 from above it.

The bulging portion 16 is located in a higher position than the band-shaped members 10A. The bulging portion 16, as can be seen in Fig. 1, overlaps the band-shaped member 10A in a planar view of the vehicle 1. In other words, the bulging portion 16 is arranged adjacent the band-shaped member 10A in the vertical direction. The cover 15 includes the front wall 15B facing the wire harness 9 and the bulging portion 16 which is defined by a portion of the front wall 15B and bulges from the wall surface 15a of the front wall 15B toward the wire harness 9. The bulging portion 16 covers the wire harness 9 from above it.

When a physical impact acts on the vehicle 1 in the width-wise direction of the vehicle 1, so that the wire harness 9 is deformed upward toward the floor panel 2 (see the wire harness 9L indicated by a broken line in Fig. 2), it will cause the wire harness 9 to hit the bulging portion 16. The bulging portion 16 stops the wire harness 9 from being further deformed toward the floor panel 2.

The bulging portion 16, therefore, works to avoid collision of the wire harness 9 with the floor panel 2 located above the wire harness 9, thereby preventing the impact from being transmitted to the front passenger's seat (i.e., an occupant on the front passenger's seat) located above the floor panel 2.

The terminal 13B is located farther away from the opening 2b than the terminal 13A is in the terminal array direction L. The wire harness 22, therefore, has a length longer than that of the wire harness 21 within the cover 15.

The wire harness 22 is, as clearly illustrated in Fig. 9, disposed in the space 17 defined by the bulging portion 16 within the cover 15 and extends along the slant portion 16t in the terminal array direction *L*.

The wire harness 21 is located closer to the front surface 12a of the battery 12 within the cover 15 than the wire harness 22 disposed inside the space 17 defined by the bulging portion 16 is.

The battery 12 is shaped to have a vertical dimension (i.e., thickness) which is larger than a lateral dimension thereof (i.e., width in the lateral or width-wise direction of the vehicle 1). Each of the wire harnesses 21 and 22 is, therefore, arranged in the cover 15 to have a vertical length laid out in the vertical direction and a lateral length laid out in the terminal array direction *L.*

Specifically, the wire harness 21 includes the lower wire harness 21A and the upper wire harness 21B. Similarly, the wire harness 22 includes the lower wire harness 22A and the upper wire harness 22B.

The lower harnesses 21A and 22A extend upward from the opening 2b of the floor panel 2 and are located above the floor panel 2.

The upper wire harnesses 21B and 22B extend from the upper ends 21a and 22a of the lower wire harnesses 21A and 22A in the terminal array direction *L* and connect with the terminals 13A and 13B, respectively.

The wire harnesses 21 and 22 in this embodiment extend within the cover 15 to have the upper wire harnesses 21B and 22B laid out to be longer than the lower wire harnesses 21A and 22A.

The bulging portion 16, as illustrated in Fig. 3, has a dimension *L1* in the terminal array direction *L.* The dimension *L1* is, as can be seen in Fig. 10, longer than the laid-out length *L2* of the wire harnesses 21 and 22 laid out in the terminal array direction *L* within the cover 15.

The bulging portion 16 has the vertical dimension *T1* which is larger than the vertical dimension (i.e., height) *T2* of the upper wire harnesses 21B and 22B in the vertical direction. The vertical dimension *T2* of the upper wire harness 21B or the upper wire harness 22B, as referred to therein, is given by a distance in the vertical direction between an upper end of the upper wire harness 21B or 22B which is located in the highest position in the cover 15 and a lower end of the upper wire harness 21B or 22B which is located in the lowest position in the cover 15.

When the battery 12 is viewed in the lateral direction, i.e., the width-wise direction of the vehicle 1 in Fig. 9, the bulging portion 16 overlaps the upper wire harness 22B. In other words, the bulging portion 16 is aligned with the upper wire harness 22B in the longitudinal direction.

The lower wire harnesses 21A and 22A may be laid out to be longer than the upper wire harnesses 21B and 22B. In this case, the bulging portion 16 may be arranged to overlap the lower wire harness 22A as viewed in the lateral direction of the battery 12.

The front surface 12a of the battery 12, as illustrated in Fig. 9, has formed therein the cut-out portion 12b which is located in a lower position than the terminals 13A and 13B.

The cover 15 has the space 18 defined therein. The space 18 is surrounded by the cut-out portion 12b.

The cut-out portion 12b, as clearly illustrated in Figs. 7 and 9, has heat dissipating fins 12c formed thereon. The heat dissipating fins 12c are arranged inside the space 18.

The beneficial advantages offered by the protection structure of the wire harnesses 21 and 22 in this embodiment will be discussed below.

The protection structure of the wire harnesses 21 and 22 includes the terminals 13A and 13B, the battery 12, the opening 2b, and the cover 15. The terminals 13A and 13B are arranged over the front surface 12a and have the wire harnesses 21 and 22 connected thereto. The battery 12 is mounted on the floor panel 2. The opening 2b is formed in the floor panel 2 and aligned with the terminals 13A and 13B in the terminal array direction *L* in a planer view of the vehicle 1. The cover 15 is arranged above the floor panel 2 and covers the battery 12.

In the protection structure of the wire harnesses 21 and 22, the cover 15 is equipped with the bulging portion 16 which is provided in the front wall 15B which faces the front surface 12a of the battery 12. The bulging portion 16 bulges away from the front surface 12a of the battery 12. The wire harness 22 is laid out in the space 17 defined by the bulging portion 16 within the cover 15.

Thus, the wire harnesses 21 and 22 can be laid out in the cover 15 so as to be gently curved, in a case where the wire harnesses 21 and 22 extend from below to above the floor panel 2 through the opening 2b and also extend in the terminal array direction *L* to connect with the terminals 13A and 13B above the floor panel 2.

As a result, it is possible to protect the wire harnesses 21 and 22 from being damaged while avoiding excessive load on the wire harnesses 21 and 22.

In the protection structure of the wire harnesses 21 and 22 in this embodiment, each of the wire harnesses 21 and 22 is arranged in the cover to have a vertical laid-out length extending in the vertical direction and a lateral laid-out length extending in the terminal array direction *L*. The lateral laid-out length is greater than the vertical laid-out length. The bulging portion 16 is shaped to have the vertical dimension *T1* extending in the vertical direction and the lateral dimension *L1* extending in the terminal array direction *L.* The lateral dimension *L1* is larger than the vertical dimension *T1.*

The above dimensional relation serves to avoid an undesirable increase in vertical dimension (i.e., height) of the battery 12 and permits the wire harnesses 21 and 22 to be laid out in the cover 15 without any need to greatly bend the wire harnesses 21 and 22.

It is, therefore, possible to avoid an undesirable increase in size of the battery 12 and excessive bending of the wire harnesses 21 and 22 and also protect the wire harnesses 21 and 22 from damage.

In the protection structure of the wire harnesses 21 and 22 in this embodiment, the lateral dimension *L1* of the bulging portion 16 in the terminal array direction *L* is larger than the laid-out length *L2* of the upper wire harnesses 21B and 22B in the terminal array direction *L* in the cover 15.

The above dimensional relation enables the wire harnesses 21 and 22 to be laid out in the cover 15 without an undesirable increase in dimension of the battery 12 in the vertical direction and excessive bending of the wire harnesses 21 and 22, thereby more efficiently protecting the wire harnesses 21 and 22.

The protection structure of the wire harnesses 21 and 22 includes the terminal 13A and the terminal 13B which is located farther away from the opening 2b than the terminal 13A is in the terminal array direction *L*.

The terminal 13B is, as described above, arranged farther away from the opening 2b than the terminal 13A is in the terminal array direction *L*, thereby causing the laid-out length of the wire harness 22 to be longer than that of the wire harness 21 in the case 15.

The above dimensional relation results in need for connecting the end of the wire harness 22 with the terminal 13B without physical interference of the end of the wire harness 22 with the terminal 13A, thus requiring the wire harness 22 to be bent sharply.

In the protection structure of the wire harnesses 21 and 22 in this embodiment, the wire harness 22 connecting with the terminal 13B is laid out in the space 17 defined by the bulging portion 16, thereby enabling the wire harness 22 which is longer than the wire harness 21 in the cover 15 to be gently bent and arranged within the cover 15.

The above layout of the wire harness 22 protects the wire harness 22 from damage while certainly preventing excessive load from being exerted on the wire harness 22.

In the protection structure of the wire harnesses 21 and 22 in this embodiment, the wire harnesses 21 and 22 include the lower wire harnesses 21A and 22A and the upper wire harnesses 21B and 22B. The lower wire harnesses 21A and 22A extend upward from the opening 2b so that they are arranged above the floor panel 2 within the cover 15. The upper wire harnesses 21B and 22B extend from the upper ends 21a of the lower wire harnesses 21A and 22A in the terminal array direction L and connect with the terminals 13A and 13B.

The upper wire harnesses 21B and 22B are laid out to be longer than the lower wire harnesses 21A and 22A. As viewed in the lateral direction of the battery 12, the bulging portion 16 is located to overlap the upper wire harness 22B.

The reasons why the above arrangements are realized are because when the wire harnesses 21 and 22 are gently bent, they may extend straight upward from the opening 2b of the floor panel 2 and then be curved in the terminal array direction L toward the terminals 13A and 13B.

In other words, the wire harnesses 21 and 22 in this embodiment include the upper wire harnesses 21B and 22B extending upward and the lower wire harnesses 21A and 22A extending in the terminal array direction *L* within the cover 15.

Therefore, in the case where the upper wire harnesses 21B and 22B are laid out to be longer than the lower wire harnesses 21A and 22A, the longer upper wire harness 22B is enabled to be disposed within the space 17 of the bulging portion 16, in other words, a portion of the wire harnesses 21 and 22 to be placed in the bulging portion 16 by arranging the bulging portion 16 to overlap the upper wire harness 22B as viewed in the lateral direction of the battery 12.

The above structure, therefore, minimizes excessive bending of the wire harnesses 21 and 22 and enables the wire harnesses 21 and 22 to be laid out in the cover 15.

The protection structure of the wire harnesses 21 and 22 in this embodiment has the upper wire harnesses 21B and 22B laid out to be longer than the lower wire harnesses 21A and 22A and also has the bulging portion 16 having the vertical dimension *T1* larger than the vertical dimension *T2* of the upper wire harnesses 21B and 22B.

The above dimensional relation enables the volume of the space 17 defined by the bulging portion 16 to be increased to be large enough to lay out the upper wire harness 21B within the space 17. This enables the wire harnesses 21 and 22 to be arranged inside the cover 15 without any need for sharply bending the upper wire harnesses 21B and 22B, thereby enhancing the protection of the wire harnesses 21 and 22 against damage.

The protection structure of the wire harnesses 21 and 22 in this embodiment has the bulging portion 16 which is equipped with the slant portion 16t. The slant portion 16t is inclined to have an upper end located farther away from the front surface 12a of the battery 12 than a lower end thereof is.

The protection structure also has the upper wire harnesses 21B and 22B extending along the slant portion 16t in the terminal array direction *L*.

The above layout enables the degree to which the wire harnesses 21 and 22 are bent to be determined by the bulging portion 16, thereby facilitating the ease with which the wire harnesses 21 and 22 are gently curved.

It is, therefore, possible to minimize excessive bending of the wire harnesses 21 and 22 and enables the wire harnesses 21 and 22 to be laid out in the cover 15, thereby enhancing the protection of the wire harnesses 21 and 22 from damage.

The protection structure in this embodiment is equipped with the terminals 13A and 13B, but may alternatively be designed to have three or more terminals and three or more wire harnesses. In this case, at least one of the wire harnesses except for a wire harness connected to the closest terminal to the opening 2b may be laid out in the space 17, or only a wire harness connected to the farthest terminal from the opening 2b may be laid out in the space 17.

The wire harness 22 is, as described above, disposed in the space 17 of the bulging portion 16, but however, both the wire harnesses 21 and 22 may alternatively be arranged within the space 17.

The electrical device is not limited to the battery 12, but may be implemented by, for example, a DC-DC converter or an electrical part mounted in the vehicle 1.

### [Reference Signs List]

1: vehicle
2: floor panel
2a: upper surface (upper surface of floor panel)
2b: opening
12: battery (electrical device)
12a: front surface (side surface of electrical device)
13A: terminal (first terminal)
13B: terminal (second terminal)
15: cover
15B: front wall (side wall of cover)
16: bulging portion
16t: slant portion
17: space (space defined by bulging portion)
21, 22: wire harness
21A, 22A: lower wire harness
21B, 22B: upper wire harness
L: terminal array direction

## Claims

1. A vehicle (1), comprising:
a floor panel (2); and
a protection structure of wire harnesses (21, 22), the protection structure of wire harnesses (21, 22) comprising:
an electrical device (12) with a plurality of terminals (13A, 13B) which are disposed on a side surface (12a) thereof and to which the wire harnesses (21, 22) are connected, the electrical device (12) being mounted on the floor panel (2);
an opening (2b) which is formed in the floor panel (2) and, in a planar view of the vehicle (1), arranged with the terminals (13A, 13B) in a terminal array direction (L) in which the terminals (13A, 13B) are arrayed; and
a cover (15) which is disposed on the floor panel (2) to cover the electrical device (12), wherein
the wire harnesses (21, 22) extend from below to above the floor panel (2) through the opening (2b) and also extend in the terminal array direction (L) above the floor panel (2), so as to connect with the terminals (13A, 13B),
the cover (15) has a side wall (15B) which faces the side surface (12a) of the electrical device (12) and is equipped with a bulging portion (16), the bulging portion (16) bulging from a wall surface (15a) of the side wall (15B) so as to be away from the side surface (12a) of the electrical device (12), and
at least one of the wire harnesses (21, 22) is laid out in a space (17) defined by the bulging portion (16) within the cover (15).

2. The vehicle (1) as claimed in claim 1, wherein each of the wire harnesses (21, 22) is arranged in the cover (15) so that a laid-out length thereof in the terminal array direction (L) becomes longer than that in a vertical direction, and wherein
the bulging portion (16) is shaped so that a dimension (L1) thereof in the terminal array direction (L) becomes longer than that in the vertical direction.

3. The vehicle (1) as claimed in claim 1 or 2, wherein a/the dimension (L1) of the bulging portion (16) in the terminal array direction (L) is longer than a laid-out length of the wire harnesses (21, 22) in the terminal array direction (L) within the cover (15).

4. The vehicle (1) as claimed in any one of claims 1 to 3, wherein the terminals (13A, 13B) include a first terminal (13A), and a second terminal (13B) which is located farther away from the opening (2b) in the terminal array direction (L) than the first terminal (13A) is, and wherein
one of the wire harnesses (21, 22) which connects with the second terminal (13B) is disposed in the space (17) defined by the bulging portion (16).

5. The vehicle (1) as claimed in any one of claims 1 to 4, wherein each of the wire harnesses (21, 22) includes a lower wire harness (21A, 22A) and an upper wire harness (21B, 22B), the lower wire harness (21A, 22A) extending upward from the opening above the floor panel (2) within the cover (15), the upper wire harness (21B, 22B) extending from an upper end (21a, 22a) of the lower wire harness (21A, 22A) in the terminal array direction (L) and connecting with the terminal (13A, 13B), wherein
one of the upper wire harness (21B, 22B) and the lower wire harness (21A, 22A) is laid out to be longer than the other, and wherein
as viewed in a lateral direction of the electrical device (12), the bulging portion (16) is located to overlap one of the upper wire harness (21B, 22B) and the lower wire harness (21A, 22A).

6. The vehicle (1) as claimed in claim 5, wherein the upper wire harness (21B, 22B) is laid out to be longer than the lower wire harness (21A, 22A), and wherein
the bulging portion (16) has a vertical dimension (T1) larger than that of the upper wire harness (21B, 22B).

7. The vehicle (1) as claimed in claim 5 or 6, wherein the bulging portion (16) includes a slant portion (16t) which inclines so as to be farther away from the side surface (12a) of the electrical device (12) upward, and wherein
the upper wire harness (21B, 22B) extends along the slant portion (16t) in the terminal array direction (L).

## Patentansprüche

1. Fahrzeug (1), umfassend:
ein Bodenpaneel (2); und
eine Schutzstruktur für Kabelbäume (21, 22), wobei die Schutzstruktur für Kabelbäume (21, 22) umfasst:
eine elektrische Vorrichtung (12) mit einer Mehrzahl von Terminals (13A, 13B), die an einer Seitenoberfläche (12a) davon angeordnet sind und mit denen die Kabelbäume (21, 22) verbunden sind, wobei die elektrische Vorrichtung (12) an dem Bodenpaneel (2) angebracht ist;
eine Öffnung (2b), die in dem Bodenpaneel (2) ausgebildet ist und in einer planaren Ansicht des Fahrzeugs (1) mit den Terminals (13A, 13B) in einer Terminalanordnungsrichtung (L) angeordnet ist, in der die Terminals (13A, 13B) angeordnet sind; und
eine Abdeckung (15), die auf dem Bodenpaneel (2) angeordnet ist, um die elektrische Vorrichtung (12) abzudecken, wobei
die Kabelbäume (21, 22) sich von unterhalb des Bodenpaneels (2) durch die Öffnung (2b) nach oben erstrecken und sich auch in der Terminalanordnungsrichtung (L) oberhalb des Bodenpaneels (2) erstrecken, um mit den Terminals (13A, 13B) verbunden zu sein,
die Abdeckung (15) eine Seitenwand (15B) aufweist, die der Seitenoberfläche (12a) der elektrischen Vorrichtung (12) zugewandt ist und mit einem Auswölbungsabschnitt (16) versehen ist, wobei der Auswölbungsabschnitt (16) von einer Wandoberfläche (15a) der Seitenwand (15B) so vorsteht, dass er von der Seitenoberfläche (12a) der elektrischen Vorrichtung (12) beabstandet ist, und
mindestens einer der Kabelbäume (21, 22) in einem durch den Auswölbungsabschnitt (16) innerhalb der Abdeckung (15) festgelegten Raum (17) verlegt ist.

2. Fahrzeug (1) gemäß Anspruch 1, wobei jeder der Kabelbäume (21, 22) in der Abdeckung (15) so angeordnet ist, dass seine Auslegungslänge in der Terminalanordnungsrichtung (L) länger ist als in einer Vertikalrichtung, und wobei
der Auswölbungsabschnitt (16) so geformt ist, dass eine Abmessung (L1) desselben in der Terminalanordnungsrichtung (L) länger ist als in der Vertikalrichtung.

3. Fahrzeug (1) gemäß Anspruch 1 oder 2, wobei die Abmessung (L1) des Abschnitts (16) mit Auswölbung in der Terminalanordnungsrichtung (L) länger ist als eine Auslegungslänge der Kabelbäume (21, 22) in der Terminalanordnungsrichtung (L) innerhalb der Abdeckung (15).

4. Fahrzeug (1) nach einem der Ansprüche 1 bis 3, wobei die Terminals (13A, 13B) ein erstes Terminal (13A) und ein zweites Terminal (13B) umfassen, das in der Terminalanordnungsrichtung (L) weiter von der Öffnung (2b) entfernt angeordnet ist als das erste Terminal (13A), und wobei
einer der Kabelbäume (21, 22), der mit dem zweiten Terminal (13B) verbunden ist, in dem durch den auswölbenden Abschnitt (16) festgelegten Raum (17) angeordnet ist.

5. Fahrzeug (1) gemäß einem der Ansprüche 1 bis 4, wobei jeder der Kabelbäume (21, 22) einen unteren Kabelbaum (21A, 22A) und einen oberen Kabelbaum (21B, 22B) umfasst, wobei der untere Kabelbaum (21A, 22A) sich von der Öffnung oben über dem Bodenpaneel (2) innerhalb der Abdeckung (15) nach oben erstreckt, wobei der obere Kabelbaum (21B, 22B) sich von einem oberen Ende (21a, 22a) des unteren Kabelbaums (21A, 22A) in der Terminalanordnungsrichtung (L) erstreckt und mit dem Terminal (13A, 13B) verbunden ist, wobei
einer der oberen Kabelbäume (21B, 22B) und der unteren Kabelbäume (21A, 22A) länger als der andere verlegt ist, und wobei
in einer Querrichtung der elektrischen Vorrichtung (12) betrachtet, der Abschnitt (16) mit der Auswölbung so angeordnet ist, dass er einen der oberen Kabelbäume (21B, 22B) und den unteren Kabelbaum (21A, 22A) überlappt.

6. Fahrzeug (1) gemäß Anspruch 5, wobei der obere Kabelbaum (21B, 22B) länger als der untere Kabelbaum (21A, 22A) ausgebildet ist, und wobei
der Abschnitt (16) mit der Auswölbung eine vertikale Abmessung (T1) aufweist, die größer ist als die des oberen Kabelbaums (21B, 22B).

7. Fahrzeug (1) nach Anspruch 5 oder 6, wobei der Abschnitt (16) mit Auswölbung einen schrägen Abschnitt (16t) umfasst, der so geneigt ist, dass er sich von der Seitenoberfläche (12a) der elektrischen Vorrichtung (12) nach oben entfernt, und wobei
sich der obere Kabelbaum (21B, 22B) entlang des schrägen Abschnitts (16t) in Terminalanordnungsrichtung (L) erstreckt.

## Revendications

1. Véhicule (1) comprenant :
un panneau de plancher (2) ; et
une structure de protection de faisceaux de câbles (21, 22), la structure de protection de fezceaux de câbles (21, 22) comprenant :
un dispositif électrique (12) comportant une pluralité de terminaux (13A, 13B) qui sont disposés sur une surface latérale (12a) de celui-ci et auxquels les faisceaux de câbles (21, 22) sont connectés, le dispositif électrique (12) étant monté sur le panneau de plancher (2) ;
une ouverture (2b) qui est formée dans le panneau de plancher (2) et, dans une vue en plan du véhicule (1), agencée avec les terminaux (13A, 13B) dans une direction d'agencement des terminaux (L) dans laquelle les terminaux (13A, 13B) sont agencés ; et
un couvercle (15) qui est disposé sur le panneau de plancher (2) pour recouvrir le dispositif électrique (12), dans lequel
les faisceaux de fils (21, 22) s'étendent depuis le dessous jusqu'au-dessus du panneau de plancher (2) à travers l'ouverture (2b) et s'étendent également dans la direion d'alignement des terminaux (L) au-dessus du panneau de plancher (2), de manière à se connecter aux terminaux (13A, 13B),
le couvercle (15) comporte une paroi latérale (15B) qui fait face à la surface latérale (12a) du dispositif électrique (12) et est équipée d'une partie bombée (16), la partie bombée (16) faisant saillie à partir d'une surface de paroi (15a) de la paroi latérale (15B) de manière à être éloignée de la surface latérale (12a) du dispositif électrique (12), et
au moins l'un des faisceaux de câbles (21, 22) est disposé dans un espace (17) défini par la partie renflée (16) à l'intérieur du couvercle (15).

2. Véhicule (1) selon la revendication 1, dans lequel chacun des faisceaux de câbles (21, 22) est agencé dans le couvercle (15) de telle sorte que sa longueur disposée dans la direction d'alignement des terminaux (L) soit plus longue que dans la direction verticale, et dans lequel
la partie renflée (16) est formée de telle sorte qu'une dimension (L1) de celle-ci dans la direction d'alignement des terminaux (L) devient plus longue que celle dans la direction verticale.

3. Véhicule (1) selon la revendication 1 ou 2, dans lequel la ou les dimensions (L1) de la partie renflée (16) dans la direction d'alignement des terminaux (L) sont plus longues qu'une longueur déployée des faisceaux de câbles (21, 22) dans la direction d'alignement des terminaux (L) à l'intérieur du couvercle (15).

4. Véhicule (1) selon l'une quelconque des revendications 1 à 3, dans lequel les terminaux (13A, 13B) comprennent un premier terminal (13A) et un second terminal (13B) qui est situé plus loin de l'ouverture (2b) dans la direction d'alignement des terminaux (L) que le premier terminal (13A), et dans lequel
l'un des faisceaux de câbles (21, 22) qui se connecte à la deuxième borne (13B) est disposé dans l'espace (17) défini par la partie renflée (16).

5. Véhicule (1) selon l'une quelconque des revendications 1 à 4, dans lequel chacun des faisceaux de câbles (21, 22) comprend un faisceau de câbles inférieur (21A, 22A) et un faisceau de câbles supérieur (21B, 22B), le faisceau de câbles inférieur (21A, 22A) s'étendant vers le haut à partir de l'ouverture au-dessus du panneau de plancher (2) à l'intérieur du couvercle (15), le faisceau de câbles supérieur (21B, 22B) s'étendant à partir d'une extrémité supérieure (21a, 22a) du faisceau de câbles inférieur (21A, 22A) dans la direction d'alignement des terminaux (L) et se connectant avec le terminal (13A, 13B), dans lequel
l'un des faisceaux de câbles supérieurs (21B, 22B) et des faisceaux de câbles inférieurs (21A, 22A) est disposé de manière à être plus long que l'autre, et dans lequel
vu dans une direction latérale du dispositif électrique (12), la partie renflée (16) est située de manière à chevaucher l'un des faisceaux de câbles supérieurs (21B, 22B) et le faisceau de câbles inférieur (21A, 22A).

6. Véhicule (1) selon la revendication 5, dans lequel le faisceau de câbles supérieur (21B, 22B) est disposé de manière à être plus long que le faisceau de câbles inférieur (21A, 22A), et dans lequel
la partie renflée (16) a une dimension verticale (T1) supérieure à celle du faisceau de câbles supérieur (21B, 22B).

7. Véhicule (1) selon la revendication 5 ou 6, dans lequel la partie renflée (16) comprend une partie inclinée (16t) qui s'incline de manière à s'éloigner vers le haut de la surface latérale (12a) du dispositif électrique (12), et dans lequel
le faisceau de câbles supérieur (21B, 22B) s'étend le long de la partie inclinée (16t) dans la direction d'alignement des terminaux (L).
